# EUROPEAN PATENT SPECIFICATION

(11) **EP 3 332 648 B1**
(45) Date of publication and mention of the grant of the patent: **17.07.2019**
(21) Application number: 15770552.6
(22) Date of filing: 04.08.2015
(51) Int. Cl.: A22C 13/02

(54) **AUTOMATIC CASING STICK MACHINE**
AUTOMATISCHE MASCHINE ZUR BEHANDLUNG VON SCHLAUCHHÜLLEN
MACHINE AUTOMATIQUE POUR BÂTONS DE BOYAU

(43) Date of publication of application: 13.06.2018
(73) Proprietor: Sayer Technologies, S. L., 31160 Orcoyen (Navarra) (ES)
(72) Inventor: LEGAZ AZCONA, Santos, E-31160 Orcoyen (Navarra) (ES)
(74) Representative: Pons Ariño, Angel
(86) International application number: PCT/ES2015/070609
(87) International publication number: WO 2017/021564

(56) References cited:
- FR-A- 1 404 677
- US-A- 3 110 058
- US-A- 3 209 398
- US-A- 4 914 784
- US-A1- 2009 215 367

## Description

### OBJECTIVE OF THE INVENTION

The present invention falls within the technical field of industrial machines used in the food industry. More specifically, it is aimed to be used by manufacturers of collagen, cellulose and plastics.

An automatic machine that works with casing sticks for meat products is described. The machine is modular and comprises a plurality of workstations for receiving, processing, cleaning, weighing, handling and/or packing the casing sticks.

### BACKGROUND OF THE INVENTION

The casings of collagen, cellulose, etc. used for meat sausage products are manufactured by forming sticks that are the casing tubes shirred in on themselves so as to occupy the fewer possible space.

These casing sticks have to pass through a production process that involves various operations to ensure that the final product complies with the necessary hygiene requirements and to ensure that all the casing sticks are equal.

From the state of the art different machines used in the food industry and by manufacturers of collagen, cellulose and plastics for this sector are known. In general, each of these machines performs a different operation within the production process. In addition, in most cases the operators have to introduce the casing sticks into each machine and check the operations.

This involves a number of disadvantages, such as, for example, the fact that it is necessary to have at least one operator continuously supervising the process, that a plurality of different machines are required to carry out the complete process, that a lot of time is wasted and it is difficult to ensure the repeatability of the product when part of the process depends on an operator, etc.

In addition, wherever different products are manufactured in the same factory it is necessary to have different machines for each of them as because there may be operations that are the same in the two procedures but there will be others that are different.

Some state of the art machines allow performing more than one of the process operations but with the current knowledge it is always necessary to have more than one machine.

From the state of the art it is kwon, for example, document EP-0962143 that describes a sausage making machine that comprises a plurality of devices for sealing the casing stick and cleaning the excess lateral ends. This machine has to be installed next to other machines that perform other operations on the casing sticks such as, for example, weighing them or checking their closure. It is also necessary to subsequently send the casing sticks to a packaging machine.

Additionally, document CN-203094483 describes a casing stick packing machine. The problem of this machine is that it is necessary to install it at the end of the process because it is necessary to treat the sausages before packing them.

Documents US-8366522 and EP-1867233, for example, describe other types of machines that are also designed to perform some of the initial operations in the casing stick treatment process.

Document FR1404677 of the state of the art discloses a method and apparatus for shirring tubular casings. The apparatus comprises a fixed mandrel for guiding a continuous collagen tube, rolls for guiding the tube on to the mandrel, shirring rolls provided with a plurality of spaced flexible wiping fingers so positioned that the fingers frictionally engage opposite sections of the tube, means for continuously advancing the tube on said mandrel into the reach of the shirring rolls, means for severing the shirred sections into predetermined lengths, an ejector device that moves into and out of the course of travel of the tube for periodically stripping finished shirred lengths from the mandrel, and a yieldable barrier in the path of the continuous tube, which barrier can be turned out of the working range of the mandrel when the shirred casing is to be ejected.

### DESCRIPTION OF THE INVENTION

The present invention describes an automatic casing stick machine according to claim 1 that is preferably located at the end of the production line of manufacturers of collagen, cellulose or plastics for the packaging of meat products, before final delivery to the customer.

This is a machine for casing sticks destined for the packaging of meat products. It is a machine of the type comprising at least an input of casing sticks where they are introduced individually, an intermediate section that the casing sticks pass through and where all the production processes can be performed and an output where the casing sticks are collected.

The automatic machine can have as many workstations as necessary and comprises additional elements allowing all operations to be performed in just one machine from casing stick reception to packing in boxes and stacking of these boxes for distribution of the final product to customers.

The middle section contains a number of workstations including a casing stick weighing workstation, a casing stick cleaning workstation, a casing stick burning workstation, a casing stick closing workstation and a casing stick inspection workstation.

To facilitate the movement of the casing sticks throughout the intermediate section the machine comprises in this section a modular displacement system.

The modular displacement system comprises a support structure with a number of adjacent modules for receiving the casing sticks. The support structure further comprises at least one pusher for each module or even a pusher with different pushing surfaces, each one corresponding to a module. The pushers move the casing sticks along a sloping surface from each module towards the next module when the operation relating to a module has been performed.

The intermediate section contains the workstations where the different process operations are performed. Preferably each of the machine's workstations is arranged in correspondence with a support structure module. When a casing stick is in a particular module the corresponding workstation becomes operational.

In the cases where for a determined product an operation is not wanted to be performed, when the casing stick is located in the module corresponding to that operation, the workstation does not become activated and the operation is not performed.

The most important advantage of the machine described is that the intermediate section is modular and it is therefore possible to add or remove modules depending on the requirements or tastes of each individual user. This simply requires the addition of modules to the support structure or the removal of unwanted ones.

In a preferred embodiment the support structure comprises at least two modules. In another embodiment the machine can have more modules than workstations, in which case when a casing stick is located over a module without an associated workstation no action will be taken and the casing stick is moved by the pusher relating to the next module.

The process operations that the casing stick passes through are shirring, cleaning, weighing, handling and packing in boxes. All these operations can be performed in the machine's intermediate section by placing the required number of modules and workstations.

In cases where the machine is to be installed in factories that already have machines to perform some of these operations it is possible to remove the modules and workstations relating to these operations. This reduces production process costs and the cycle time.

The automatic casing stick machine of the present invention offers significant improvements and advantages over other machines available on the market or over known manual and semi-automated processes.

Technically it achieves an improvement in process quality as the machine allows the process to be fully controlled through programming of the parameters (repeatability). It eliminates the human factor and all the associated errors that can result from human actions during the process.

The machine also improves product traceability, with accurate product information up to its presentation for shipment to the customer.

The modularity of the automatic machine allows having different types of closure on a single machine since it is only necessary to add more than one casing stick closing workstation. This application is very advantageous in cases where the machinery is used to make different products and where the type of closing needs to be adapted to the product type. In these cases programming can be used to select the casing stick closing workstation active in each case.

In general, when the casing stick arrives at a module corresponding to a workstation that is not to be used in a particular process this workstation simply remains inactive and the casing stick moves to the next module.

The work speed is multiplied because all the operations can be performed on the same machine and in a relatively small area. This allows a reduction in the cycle time thereby increasing productivity. Furthermore, electronic components are used in the workstations that also help to increase the operation speed.

Another advantage is the improved accessibility to different process areas, both for machine maintenance and for cleaning, thereby protecting the machine's most sensitive parts from dirt associated with the process and the product. This is achieved by placing said components in a housing.

The automatic machine is highly flexible in adapting to different shirring models, workstations can be added or removed depending on the user's requirements, it allows independent working from the rest of the process and it allows the combination into one machine of all the process phases from input to the machine to packaging for delivery to the customer.

In terms of health and safety, the machine eliminates the handling of the product by operatives in all process phases thereby guaranteeing that there is no external contamination of the product and that it complies with the quality standards established by the food industry in this regard.

The machine has an enhanced ergonomics for the cleaning and maintenance operations due to comfortable and controlled distances. Complete safety is also guaranteed in case of accidents should the maintenance equipment be activated as the machine incorporates preferential safety control systems (such as safety barriers, fixed and mobile protection, micros, etc.).

Notable economic advantages of the invention include the reduction in direct labour costs as it is a totally automatic machine, productivity is increased, product rejections are reduced (as the process is totally controlled and automated this ensures the repeatability of the product obtained), there is a reduction in the waste caused by excess product material as the excess cutting operation is performed using the exact measurements required and highly energy efficient components of the machine save costs of energy use.

Use of the machine also has environmental advantages such as, for example, a reduction in the amount of wastes that have to be disposed of. The machine also operates in an energy efficient and controlled manner.

Wherever possible the pneumatic systems have been replaced by linear actuators that use electricity, thereby allowing total control over motion parameters such as acceleration, deceleration, velocity or force as well as infinite destination positions.

### DESCRIPTION OF THE DRAWINGS

To complement the description being made and with the aim of providing a greater understanding of the invention's characteristics, in accordance with a preferred practical embodiment thereof, a set of drawings are included as an integral part of this description, which in an illustrative and non-limiting manner show the following:
Figure 1.- Shows a perspective view of the automatic casing stick machine.
Figure 2.- Shows a close up view of the automatic casing stick machine shown in Figure 1.
Figure 3.- Shows a view of the modular displacement system.
Figure 4.- Shows a view of a module of the modular support structure.
Figure 5.- Shows a view of the casing stick weighing workstation.
Figure 6.- Shows a view of the automatic casing stick machine's intermediate section, including a variety of workstations and a number of casing sticks arranged in the modular displacement system.
Figure 7.- Shows a view of the output and handling workstations.

### PREFERRED EMBODIMENT OF THE INVENTION

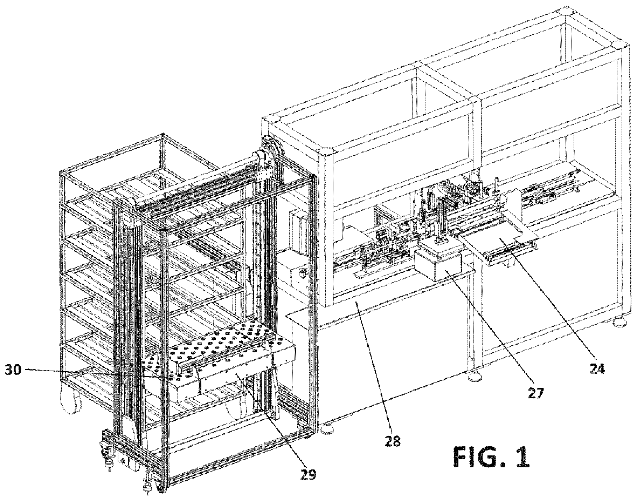

The following describes, with the help of Figures 1 to 7, embodiment examples of the automatic casing stick machine of the invention.

The automatic casing sticks machine used for packing meat products of the present invention is shown in Figure 1. It is of the type that comprises at least:
- a casing stick input (1) where the individual sticks (5) are introduced,
- an intermediate section (3) where the casing sticks (5) move along the machine through a number of workstations in which a number of operations are performed on the casing sticks (5),
- a casing stick output (2) located at the end of the intermediate section where the sticks are removed.

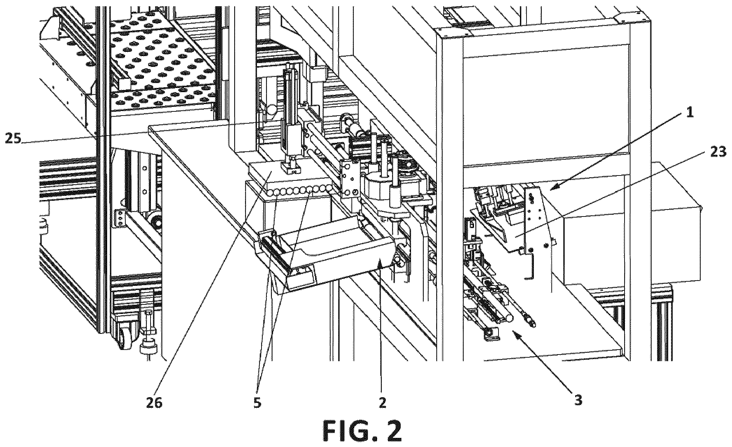

Figure 2 shows a close up view of the automatic casing stick machine shown in Figure 1.

As previously stated, the described machine's most important characteristic is that it is modular. More specifically, the machine's intermediate section is modular. This allows the machine to be adapted to the specific needs of each user, each product and each production process.

The intermediate section comprises a displacement system responsible for moving the casing sticks (5) along the machine from the casing stick input (1) to the casing stick output (2). During this movement a casing stick traverses the length of the machine's intermediate section and the required operations are performed on it depending on the process.

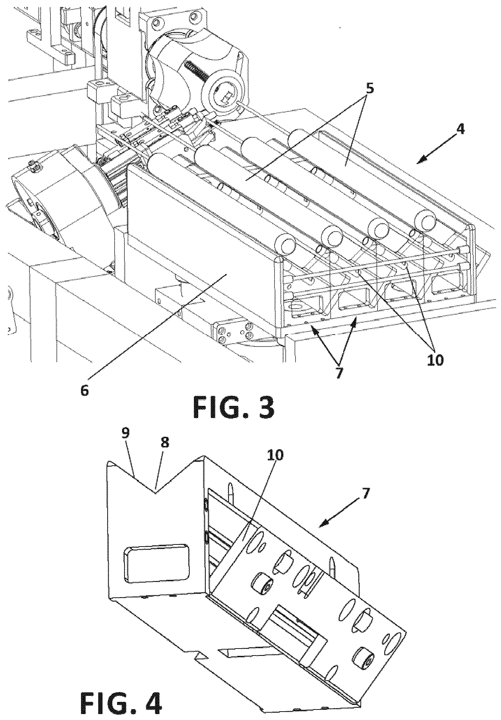

The displacement system (4), as shown in Figure 3, is modular and comprises:
- a support structure (6) with a number of adjacent modules (7) that have at least one longitudinal support surface (8) for supporting the casing stick while the operation at a workstation is being performed and at least one inclined surface (9) with the gradient of the slope increasing towards the adjacent module (7),
- at least one pusher (10) located in each module (7) with the possibility of movement along the inclined surface (9) of its module (7) configured to move the casing stick (5) along the inclined surface (9) to the adjacent module (7), and
- at least one motor connected to the pusher (10).

Figure 4 shows a module (7) of the type that can be introduced to or removed from the support structure (6) according to the user's needs. Each module (7) located on the support structure (6) is associated with a workstation selected among acasing stick weighing workstation, a casing stick cleaning workstation, a casing stick burning workstation, a casing stick closing workstation and casing stick inspecting workstation.

In one example embodiment the module's (7) support surface (8) can coincide with the inclined surface (9).

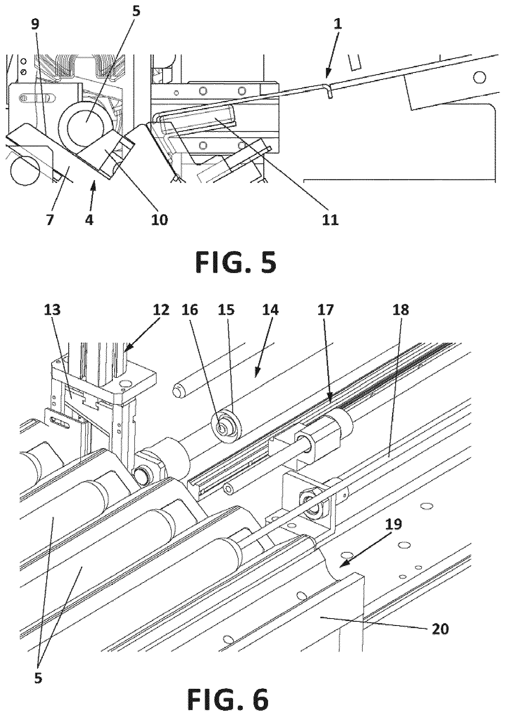

One of the workstations that the machine can comprise is a workstation for weighing the casing sticks as shown in Figure 5. This workstation is located in the intermediate section (3) before the modular displacement system (4) and it comprises at least one load cell (11) located on a surface that extends between the casing stick input (1) and the modular displacement system (4).

The load cell allows data to be obtained regarding the product's density and its length in order to determine if the product is acceptable or not in comparison with previously established acceptance criteria. Should the result not conform to the pre-established values the unacceptable piece is discarded so it no longer continues through the process.

Another workstation that can be included in the machine is one for casing stick cleaning (12). The objective of this workstation is to remove the initial part of the artificial gut that is more likely to be in poor condition. The cleaning is preferably carried out on both ends of the casing stick.

Figure 6 shows a number of workstations located in the machine's intermediate section (3). These include the casing stick cleaning workstation located at the beginning of the intermediate section (3).

In an example embodiment the casing stick cleaning workstation comprises:
- a pneumatic cylinder with a suction element that is facing a module and that is movable until being in contact with the module, fixing the position of the casing stick (5) between the suction element and the support surface of the module,
- at least one clamp arranged in the longitudinal direction of the casing stick (5) that can move in that direction and that is adapted to grip the free end of the casing stick and stretch it,
- at least one guillotine (13) arranged in a direction perpendicular to the movement of the clamp and adapted to cut the end of the casing stick (5) joined to the clamp

The procedure performed at this workstation is to fix the casing stick (5) to the module (7) by using a pneumatic cylinder to press its upper part and then move the clamp to the casing stick. In an example embodiment the clamp is a pneumatically driven mechanical system based on a scissor mechanism coupled to a drive cylinder by a spacer spindle. The clamp can move to the casing stick to clamp it and move away from the stick. When the casing stick is clamped it is cut using the guillotine and the cut part is discarded to ensure that the shirring is correctly performed across the entire surface of the stick.

Another workstation that can be located in the machine's intermediate section is a casing stick burning workstation (14) such as, for example, that shown in Figure 6. In this case the casing stick burning workstation comprises at least one actuator (15) with a cap with electrical resistance (16) that can move in the longitudinal direction of the stick (5) until contacting with a free end of the casing stick (5) and that is configured to burn this end of the stick.

The burner temperature is controlled using a temperature regulator. The strength of the burn depends on the composition of the casing stick. The burning workstation also comprises a displacement control that is mechanically regulated using adjustable stops depending of the length of the product that is to be worked with.

The machine can also comprise one or a number of casing stick closing workstations (17), such as, for example, that shown in Figure 6. The feature of the modular displacement system (4) of allowing engagement or withdrawal of a variable number of modules (7) and their associated workstations allow having in the same machine, for example, more than one casing stick closing workstation (17). This allows, for example, doing different closures on one machine thereby using the closure that is best or desired by the user depending on the product type. This allows the manufacture of different products on the same machine.

An example of the casing stick closing workstation comprises at least:
- a rotating claw with possibility of movement along the longitudinal direction of the casing stick and possibility of turning around itself to allow the support and rolling of one end of the casing stick,
- two pneumatic clamps with possibility of longitudinally displacement and turn, and which are configured to make a knot in the rolled end of the casing stick

Another workstation that the machine can comprise is a casing stick inspection workstation (18), such as can be seen in Figure 6, which is used when the casing stick (5) is closed, to check the tightness of the closure. Preferably comprising:
- a pneumatic carriage that can move longitudinally along the longitudinal length of the casing stick until it comes into contact with a free end of the casing stick closing it with a mechanical stop,
- a pressure element for introducing compressed air into the casing stick through the opposite end of the stick,
- a monitoring unit configured to determine the internal pressure of the casing stick.

At this inspection workstation the interior of the casing stick is pressurised and the pressure is measured to determine whether there is any loss in pressure. If the pressure falls below a predetermined value after a specified time the casing stick is considered to have a leak and it is discarded.

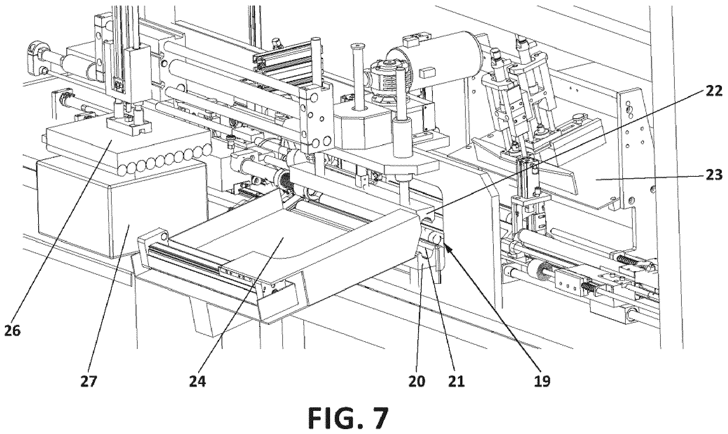

Additionally the machine can comprise in the intermediate section a stabilising workstation (19) that can also be seen in Figure 6. It comprises at least a fixed cradle (20) with a longitudinal groove (21) intended for receiving the casing stick (5) from the modular displacement system and a mobile plunger (22) with horizontal displacement over the fixed cradle (21) for ensuring the position of the casing stick (5) when it moves down and comes into contact with the fixed cradle (20). These elements can be seen in Figure 7.

Also in a preferred example at least the fixed cradle (20) or the mobile plunger (22) are comprised of some protuberances intended to remain in contact with the casing stick and ensure its position.

As shown in Figure 1 the machine can also comprise a casing stick receiving workstation (23) connected to the casing stick input (1) and comprising at least an input tray for receiving the casing sticks (5) and a number of actuators that move the casing sticks along the tray up to the intermediate section's modular displacement system.

Additionally the machine can also comprise an output workstation (24) arranged in a rear additional section connected to the casing stick output (2) and comprising a collection tray to receive the casing sticks (5) from the modular displacement system and comprising a lateral pusher with configured movement to allow stacking of the casing sticks. It is preferable if the collection tray is inclined to facilitate the stacking of the casing sticks.

In addition, after the output workstation (24) the machine can have a casing stick handling workstation (25) in the rear additional section of the machine comprised of a face plate (26) with a number of grooves shaped with a configuration in correspondence with that of the casing sticks (5) and some pneumatic actuators and a vacuum group configured to allow the placing of the face plate (26) over the output tray and to support the casing sticks (5) by vacuum.

It is also possible to have a receiving and displacing boxes workstation located in the rear additional section of the machine comprising a number of boxes (27) for receiving the casing sticks from the casing stick handling workstation and comprising a conveyor belt (28) configured to move said boxes along its length.

Lastly, the machine can comprise a box lifting workstation (30) located in the rear additional section of the machine comprising a platform (29) that can be moved vertically and at least one pusher configured to push the boxes from the conveyor belt onto the platform.

## Claims

1. Automatic casing sticks machine for packaging meat products, the machine being of the type comprising at least a casing stick input (1) through which the casing sticks (5) are individually introduced, an intermediate section (3) where the casing sticks (5) move along the machine through a plurality of workstations in which a plurality of operations are performed on the casing sticks (5), and a casing stick output (2) where they are removed, the intermediate section (3) is modular and comprises:
- a modular displacement system (4) configured for moving the casing sticks (5) between the different workstations and that comprises:
- a support structure (6) with a plurality of adjacent modules (7) that have at least one longitudinal support surface (8) for supporting the casing sticks (5) while the operation at a workstation is being performed,
- at least one pusher (10) located in each module (7),
- at least one motor connected to the pusher (10),
and the automatic casing sticks machine is **characterised in that** the support structure (6) comprises at least one inclined surface (9) with the gradient of the slope increasing towards the adjacent module (7) and the at least one pusher (10) has possibility of movement along said inclined surface (9) of the corresponding module (7) and is configured to move the casing stick (5) along the inclined surface (9) to the adjacent module (7) and the modules (7) of the support structure (6) are associated with a workstation selected among a casing sticks weighing workstation, a casing sticks cleaning workstation, a casing sticks burning workstation, a casing sticks closing workstation and a casing sticks inspecting workstation.

2. Automatic casing stick machine according to claim 1 **characterised in that** it comprises a casing sticks weighing workstation located in the intermediate section (3) before the modular displacement system (4) and that comprises at least a load cell (11) located on a surface that extends between the casing stick input (1) and the modular displacement system (4).

3. Automatic casing stick machine according to claim 1 **characterised in that** it comprises a casing sticks cleaning workstation (12), said stick cleaning workstation comprising:
- a pneumatic cylinder with a suction element that is facing a module and that is movable until being in contact with the module, fixing the position of the casing stick (5) between the suction element and the support surface of the module,
- at least one clamp arranged in the longitudinal direction of the casing stick (5) that can move **in that** direction and that is adapted to grip the free end of the casing stick and stretch it,
- at least one guillotine (13) arranged in a direction perpendicular to the movement of the clamp and adapted to cut the end of the casing stick (5) joined to the clamp.

4. Automatic casing stick machine according to claim 1 **characterised in that** it comprises a casing stick burning workstation (14), said stick burning workstation comprising at least one actuator (15) having a cap with electrical resistance (16) that can move in the longitudinal direction of the casing stick (5) to a position where the cap is in contact with a free end of the casing stick (5), and it is configured to burn said end of the casing stick (5).

5. Automatic casing stick machine according to claim 1 **characterised in that** it comprises a closing casing sticks workstation (17), said closing workstation comprising at least:
- a rotating claw with possibility of movement along the longitudinal direction of the casing stick and possibility of turning around itself to allow the support and rolling of one end of the casing stick,
- two pneumatic clamps with possibility of longitudinally displacement and turn, and which are configured to make a knot in the rolled end of the casing stick.

6. Automatic casing stick machine according to claim 1 **characterised in that** it comprises a inspection casing sticks workstation (18), said inspection workstation comprising:
- a pneumatic carriage that can move longitudinally along the longitudinal length of the casing stick until it comes into contact with a free end of the casing stick closing it with a mechanical stop,
- a pressure element for introducing compressed air into the casing stick through the opposite end of the stick,
- a monitoring unit configured to determine the internal pressure of the casing stick.

7. Automatic casing stick machine according to claim 1 **characterised in that** it also comprises a stabilising workstation (19) located in the intermediate section and this stabilising workstation comprises at least a fixed cradle (20) with a longitudinal groove (21) intended for receiving the casing sticks (5) from the modular displacement system and a mobile plunger (22) with horizontal displacement over the fixed cradle (21) for ensuring the position of a casing stick (5) when it moves down and comes into contact with the fixed cradle (20).

8. Automatic casing stick machine according to claim 7 **characterised in that** at least the fixed cradle (20) or the mobile plunger (22) are comprised of some protuberances for remaining in contact with the casing stick (5) and ensuring its position.

9. Automatic casing stick machine according to claim 1 **characterised in that** it additionally comprises a casing stick receiving workstation (23) connected to the casing stick input (1) and comprising at least an input tray for receiving the casing sticks (5) and a number of actuators that move the casing sticks (5) along the tray up to the modular displacement system (4) of the intermediate section.

10. Automatic casing stick machine according to claim 1 **characterised in that** it comprises an output workstation (24) arranged in a rear additional section connected to the casing stick output (2) and comprising a collection tray to receive the casing sticks (5) from the modular displacement system and comprising a lateral pusher with possibility of movement configured to allow stacking of the casing sticks (5).

11. Automatic casing stick machine according to claim 10 **characterised in that** it comprises an casing stick handling workstation (25) in the rear additional section of the machine comprised of a face plate (26) with a plurality of grooves shaped with a configuration in correspondence with that of the casing sticks (5) and some pneumatic actuators and a vacuum group configured to allow the placing of the face plate (26) over the output tray and to support the casing sticks (5) by vacuum.

12. Automatic casing stick machine according to claim 11 **characterised in that** it comprises a receiving and displacing boxes workstation located in the rear additional section of the machine comprising a number of boxes (27) for receiving the casing sticks (5) from the casing stick handling workstation (25) and comprising a conveyor belt (28) configured to move said boxes through it.

13. Automatic casing stick machine according to claim 12 **characterised in that** it also comprises a box lifting workstation (30) located in the rear additional section of the machine comprising a platform (29) that can move vertically and at least one pusher configured to push the boxes (27) from the conveyor belt (28) onto the platform (29).

## Patentansprüche

1. Automatische Schlauchhüllenmaschine zum Verpacken von Fleischprodukten, wobei die Maschine von der Art ist, die mindestens eine Schlauchhülleneingabe (1), durch welche die Schlauchhüllen (5) einzeln eingeführt werden, einen mittleren Abschnitt (3), wo sich die Schlauchhüllen (5) entlang der Maschine durch eine Vielzahl von Arbeitsstationen bewegen, in denen eine Vielzahl von Vorgängen an den Schlauchhüllen (5) durchgeführt werden, und eine Schlauchhüllenausgabe (2), an der sie entfernt werden, umfasst, wobei der mittlere Abschnitt (3) modular ist und Folgendes umfasst:
- ein modulares Verschiebesystem (4), das zum Bewegen der Schlauchhüllen (5) zwischen den unterschiedlichen Arbeitsstationen konfiguriert ist und das Folgendes umfasst:
- eine Tragstruktur (6) mit einer Vielzahl von benachbarten Modulen (7), die mindestens eine Längstragfläche (8) zum Tragen der Schlauchhüllen (5) aufweisen, während der Vorgang an einer Arbeitsstation durchführt wird,
- mindestens einen in jedem Modul (7) angeordneten Schieber (10),
- mindestens einen mit dem Schieber (10) verbundenen Motor, und wobei die automatische Schlauchhüllenmaschine **dadurch gekennzeichnet ist, dass** die Tragstruktur (6) mindestens eine geneigte Fläche (9) umfasst, wobei der Grad der Steigung in Richtung des benachbarten Moduls (7) zunimmt, und der mindestens eine Schieber (10) die Möglichkeit aufweist, sich entlang der geneigten Fläche (9) des entsprechenden Moduls (7) zu bewegen und dazu konfiguriert ist, die Schlauchhülle (5) entlang der geneigten Fläche (9) zu dem benachbarten Modul (7) zu bewegen und die Module (7) der Tragstruktur (6) zu einer Arbeitsstation gehören, die aus einer Arbeitsstation zum Schlauchhüllenwiegen, einer Arbeitsstation zum Schlauchhüllenreinigen, einer Arbeitsstation zum Schlauchhüllenverbrennen, einer Arbeitsstation zum Schlauchhüllenverschließen und einer Arbeitsstation zum Schlauchhüllenuntersuchen ausgewählt ist.

2. Automatische Schlauchhüllenmaschine nach Anspruch 1, **dadurch gekennzeichnet, dass** sie eine in dem mittleren Abschnitt (3) vor dem modularen Verschiebesystem (4) angeordnete Arbeitsstation zum Schlauchhüllenwiegen umfasst, die mindestens eine Wägezelle (11) umfasst, die auf einer Fläche angeordnet ist, die sich zwischen der Schlauchhülleneingabe (1) und dem modularen Verschiebesystem (4) erstreckt.

3. Automatische Schlauchhüllenmaschine nach Anspruch 1, **dadurch gekennzeichnet, dass** sie eine Arbeitsstation (12) zum Schlauchhüllenreinigen umfasst, wobei die Arbeitsstation zum Schlauchreinigen Folgendes umfasst:
- einen pneumatischen Zylinder mit einem Saugelement, der einem Modul zugewandt ist und der bewegbar ist, bis er mit dem Modul in Kontakt steht, wodurch die Position der Schlauchhülle (5) zwischen dem Saugelement und der Tragfläche des Moduls festgelegt wird,
- mindestens eine in der Längsrichtung der Schlauchhülle (5) angebrachte Klammer, die sich in diese Richtung bewegen kann und die zum Greifen des freien Endes der Schlauchhülle und zu ihrem Dehnen ausgelegt ist,
- mindestens eine in einer zur Bewegung der Klammer senkrecht angebrachte Schneideeinrichtung (13), die zum Schneiden des mit der Klemme verknüpften Endes der Schlauchhülle (5) ausgelegt ist.

4. Automatische Schlauchhüllenmaschine nach Anspruch 1, **dadurch gekennzeichnet, dass** sie eine Arbeitsstation (14) zum Schlauchhüllenverbrennen umfasst, wobei die Arbeitsstation zum Schlauchverbrennen mindestens ein Betätigungselement (15) umfasst, das eine Kappe mit elektrischem Widerstand (16) aufweist, die sich in der Längsrichtung der Schlauchhülle (5) zu einer Position bewegen kann, an der die Kappe mit einem freien Ende der Schlauchhülle (5) in Kontakt steht, und sie zum Verbrennen des Endes der Schlauchhülle (5) konfiguriert ist.

5. Automatische Schlauchhüllenmaschine nach Anspruch 1, **dadurch gekennzeichnet, dass** sie eine Arbeitsstation (17) zum Schlauchhüllenverschließen umfasst, wobei die Arbeitsstation zum Verschließen mindestens Folgendes umfasst:
- eine rotierende Klaue mit der Möglichkeit, sich entlang der Längsrichtung der Schlauchhülle zu bewegen und der Möglichkeit, sich um sich selbst zu drehen, um das Tragen und Rollen eines Endes der Schlauchhülle zu ermöglichen,
- zwei pneumatische Klemmen mit der Möglichkeit einer Längsverschiebung und Drehung, die zum Machen eines Knotens in das gerollte Ende der Schlauchhülle konfiguriert sind.

6. Automatische Schlauchhüllenmaschine nach Anspruch 1, **dadurch gekennzeichnet, dass** sie eine Arbeitsstation (18) zum Schlauchhüllenuntersuchen umfasst, wobei die Arbeitsstation zum Untersuchen Folgendes umfasst:
- einen pneumatischen Schlitten, der sich längs entlang der Längserstreckung der Schlauchhülle bewegen kann, bis er mit einem freien Ende der Schlauchhülle in Kontakt kommt und es mit einem mechanischen Anschlag verschließt,
- ein Druckelement zum Einführen von Druckluft in die Schlauchhülle über das gegenüberliegende Ende des Schlauchs,
- eine Überwachungseinheit, die zum Bestimmen des Innendrucks der Schlauchhülle konfiguriert ist.

7. Automatische Schlauchhüllenmaschine nach Anspruch 1, **dadurch gekennzeichnet, dass** sie auch eine in dem mittleren Abschnitt angeordnete Arbeitsstation (19) zum Stabilisieren umfasst und diese Arbeitsstation zum Stabilisieren mindestens ein festes Gestell (20) mit einer Längsnut (21) umfasst, das zum Empfangen der Schlauchhüllen (5) von dem modularen Verschiebesystem bestimmt ist, und einen beweglichen Plunger (22), der sich horizontal über das befestigte Gestell (21) verschiebt, um die Position einer Schlauchhülle (5) zu sichern, wenn sie sich nach unten bewegt und mit dem festen Gestell (20) in Kontakt kommt.

8. Automatische Schlauchhüllenmaschine nach Anspruch 7, **dadurch gekennzeichnet, dass** mindestens das feste Gestellt (20) oder der bewegliche Plunger (22) einige Vorsprüngen umfassen, um mit der Schlauchhülle (5) in Kontakt zu bleiben und ihre Position zu sichern.

9. Automatische Schlauchhüllenmaschine nach Anspruch 1, **dadurch gekennzeichnet, dass** sie eine mit der Schlauchhülleneingabe (1) verbundene Arbeitsstation (23) zum Schlauchhüllenempfangen umfasst, die mindestens eine Eingabeschale zum Empfangen der Schlauchhüllen (5) und eine Reihe von Betätigungselementen umfasst, welche die Schlauchhüllen (5) entlang der Schale nach oben zu dem modularen Verschiebesystem (4) des mittleren Abschnitts bewegen.

10. Automatische Schlauchhüllenmaschine nach Anspruch 1, **dadurch gekennzeichnet, dass** sie eine in einem mit der Schlauchhüllenausgabe (2) verbundenen hinteren zusätzlichen Abschnitt angebrachte Arbeitsstation (24) zur Eingabe umfasst, die eine Sammelschale zum Empfangen der Schlauchhüllen (5) von dem modularen Verschiebesystem umfasst und einen seitlichen Schieber mit der Möglichkeit, sich zu bewegen, der zum Ermöglichen eines Stapelns der Schlauchhüllen (5) konfiguriert ist.

11. Automatische Schlauchhüllenmaschine nach Anspruch 10, **dadurch gekennzeichnet, dass** sie eine Arbeitsstation (25) zum Schlauchhüllenhandhaben in dem hinteren zusätzlichen Abschnitt der Maschine umfasst, die eine Frontplatte (26) mit einer Vielzahl von in einer Konfiguration entsprechend der der Schlauchhüllen (5) geformten Nuten und einige pneumatische Betätigungselemente und eine Vakuumgruppe umfasst, die zum Ermöglichen des Platzierens der Frontplatte (26) über der Ausgabeschale und zum Tragen der Schlauchhüllen (5) durch Vakuum konfiguriert sind.

12. Automatische Schlauchhüllenmaschine nach Anspruch 11, **dadurch gekennzeichnet, dass** sie eine in dem hinteren zusätzlichen Abschnitt der Maschine angeordnete Arbeitsstation zum Empfangen und Verschieben von Boxen umfasst, die eine Reihe von Boxen (27) zum Empfangen der Schlauchhüllen (5) von der Arbeitsstation (25) zum Schlauchhüllenhandhaben umfasst und ein Förderband (28) umfasst, das zum Bewegen der Boxen durch sie konfiguriert ist.

13. Automatische Schlauchhüllenmaschine nach Anspruch 12, **dadurch gekennzeichnet, dass** sie auch eine in dem hinteren zusätzlichen Abschnitt der Maschine angeordnete Arbeitsstation (30) zum Heben von Boxen umfasst, die eine Plattform (29), die sich vertikal bewegen kann, und mindestens einen Schieber umfasst, der zum Schieben der Boxen (27) von dem Förderband (28) auf die Plattform (29) konfiguriert ist.

## Revendications

1. Machine automatique pour bâtons de boyau pour le conditionnement des produits à base de viande, la machine étant du type comprenant au moins une entrée de bâtons de boyau (1) à travers laquelle les bâtons de boyau (5) sont introduits individuellement, une section intermédiaire (3) où les bâtons de boyau (5) se déplacent le long de la machine à travers une pluralité de postes de travail dans lesquels une pluralité d'opérations sont effectuées sur les bâtons de boyau (5), et une sortie de bâtons de boyau (2) où ils sont retirés, la section intermédiaire (3) est modulaire et comprend :
- un système de déplacement modulaire (4) configuré pour déplacer les bâtons de boyau (5) entre les différents postes de travail et qui comprend :
- une structure de support (6) avec une pluralité de modules adjacents (7) qui ont au moins une surface de support longitudinale (8) pour supporter les bâtons de boyau (5) tandis que l'opération à un poste de travail est réalisée,
- au moins un poussoir (10) situé dans chaque module (7),
- au moins un moteur raccordé au poussoir (10),
et la machine automatique pour bâtons de boyau est **caractérisée en ce que** la structure de support (6) comprend au moins une surface inclinée (9) avec l'inclinaison de la pente augmentant vers le module adjacent (7) et le au moins un poussoir (10) a la possibilité de mouvement le long de ladite surface inclinée (9) du module correspondant (7) et est configuré pour déplacer le bâton de boyau (5) le long de la surface inclinée (9) au module adjacent (7) et les modules (7) de la structure de support (6) sont associés à un poste de travail choisi parmi un poste de travail de pesage de bâtons de boyau, un poste de travail de nettoyage de bâtons de boyau, un poste de travail de brûlage de bâtons de boyau, un poste de travail de fermeture de bâtons de boyau et un poste de travail d'inspection de bâtons de boyau.

2. Machine automatique pour bâtons de boyau selon la revendication 1, **caractérisée en ce qu'**elle comprend un poste de pesage de bâtons de boyau situé dans la section intermédiaire (3) avant le système de déplacement modulaire (4) et qui comprend au moins une cellule de charge (11) située sur une surface qui s'étend entre l'entrée de bâton de boyau (1) et le système de déplacement modulaire (4).

3. Machine automatique pour bâtons de boyau selon la revendication 1, **caractérisée en ce qu'**elle comprend un poste de travail de nettoyage de bâtons de boyau (12), ledit poste de travail de nettoyage de bâtons de boyau comprenant :
- un cylindre pneumatique avec un élément d'aspiration qui est en regard d'un module et qui peut être déplacé jusqu'à ce qu'il soit en contact avec le module, fixant la position du bâton de boyau (5) entre l'élément d'aspiration et la surface de support du module,
- au moins une pince disposée dans le sens longitudinal du bâton de boyau (5), qui peut se déplacer dans ce sens et qui est adaptée pour saisir l'extrémité libre du bâton de boyau et l'étirer,
- au moins une guillotine (13) disposée dans un sens perpendiculaire au mouvement de la pince et adaptée pour couper l'extrémité du bâton de boyau (5) relié à la pince.

4. Machine automatique pour bâtons de boyau selon la revendication 1, **caractérisée en ce qu'**elle comprend un poste de travail de brûlage de bâtons de boyau (14), ledit poste de travail de brûlage de bâtons de boyau comprenant au moins un actionneur (15) ayant un capuchon à résistance électrique (16) pouvant se déplacer dans le sens longitudinal du bâton de boyau (5) jusqu'à une position où le capuchon est en contact avec une extrémité libre du bâton de boyau (5), et il est configurée pour brûler ladite extrémité du bâton de boyau (5).

5. Machine automatique pour bâtons de boyau selon la revendication 1, **caractérisée en ce qu'**elle comprend un poste de travail (17) de fermeture de bâtons de boyau, ledit poste de travail de fermeture comprenant au moins :
- une griffe rotative avec la possibilité de mouvement dans le sens longitudinal du bâton de boyau et la possibilité de tourner autour d'elle-même pour permettre le support et le roulement d'une extrémité du bâton de boyau,
- deux pinces pneumatiques avec la possibilité de déplacement et de rotation longitudinaux, et qui sont configurées pour former un noeud dans l'extrémité enroulée du bâton de boyau.

6. Machine automatique pour bâtons de boyau selon la revendication 1, **caractérisée en ce qu'**elle comprend un poste de travail d'inspection de bâtons de boyau (18), ledit poste de travail d'inspection comprenant :
- un chariot pneumatique pouvant se déplacer longitudinalement sur la longueur longitudinale du bâton de boyau jusqu'à ce qu'il vienne en contact avec une extrémité libre du bâton de boyau la fermant à l'aide d'une butée mécanique,
- un élément de pression pour introduire de l'air comprimé dans le bâton de boyau par l'extrémité opposée du bâton,
- une unité de surveillance configurée pour déterminer la pression interne du bâton de boyau.

7. Machine automatique pour bâtons de boyau selon la revendication 1, **caractérisée en ce qu'**elle comprend également un poste de travail de stabilisation (19) situé dans la section intermédiaire et ce poste de travail de stabilisation comprend au moins un berceau fixe (20) avec une rainure longitudinale (21) prévue pour recevoir les bâtons de boyau (5) du système de déplacement modulaire et un piston mobile (22) à déplacement horizontal sur le berceau fixe (21) pour maintenir la position d'un bâton de boyau (5) lorsqu'il descend et entre en contact avec le berceau fixe (20).

8. Machine automatique pour bâtons de boyau selon la revendication 7, **caractérisée en ce qu'**au moins le berceau fixe (20) ou le piston mobile (22) sont constitués de protubérances pour rester en contact avec le bâton de boyau (5) et pour maintenir sa position.

9. Machine automatique pour bâtons de boyau selon la revendication 1, **caractérisée en ce qu'**elle comprend en outre un poste de travail de réception de bâtons de boyau (23), raccordé à l'entrée de bâtons de boyau (1) et comprenant au moins un bac d'entrée pour recevoir les bâtons de boyau (5) et un certain nombre d'actionneurs qui déplacent les bâtons de boyau (5) le long du bac jusqu'au système de déplacement modulaire (4) de la section intermédiaire.

10. Machine automatique pour bâtons de boyau selon la revendication 1, **caractérisée en ce qu'**elle comprend un poste de travail de sortie (24) agencé dans une section supplémentaire arrière raccordée à la sortie de bâton de boyau (2) et comprenant un bac de récupération pour recevoir les bâtons de boyau (5) depuis le système de déplacement modulaire et comprenant un poussoir latéral avec la possibilité de mouvement configuré pour permettre l'empilement des bâtons de boyau (5).

11. Machine automatique pour bâtons de boyau selon la revendication 10, **caractérisée en ce qu'**elle comprend un poste de travail de manipulation de bâtons de boyau (25) dans la section supplémentaire arrière de la machine, constitué d'une plaque frontale (26) avec une pluralité de rainures avec une configuration correspondant à celle des bâtons de boyau (5) et de quelques actionneurs pneumatiques et d'un groupe de vide configurés pour permettre le placement de la plaque frontale (26) sur le bac de sortie et pour supporter les bâtons de boyau (5) par le vide.

12. Machine automatique pour bâtons de boyau selon la revendication 11, **caractérisée en ce qu'**elle comprend un poste de travail de réception et de déplacement de boîtes situé dans la section supplémentaire arrière de la machine, comprenant un certain nombre de boîtes (27) pour recevoir les bâtons de boyau (5) depuis le poste de travail de manipulation de bâtons de boyau (25) et comprenant un convoyeur (28) configuré pour déplacer lesdites boîtes à travers celui-ci.

13. Machine automatique pour bâtons de boyau selon la revendication 12, **caractérisée en ce qu'**elle comprend également un poste de levage de boîtes (30) situé dans la section supplémentaire arrière de la machine, comprenant une plateforme (29) qui peut se déplacer verticalement et au moins un poussoir configuré pour pousser les boîtes (27) du convoyeur (28) sur la plateforme (29).
